(19) Europäisches Patentamt
European Patent Office
Office européen des brevets

(11) **EP 2 713 044 B2**

(12) **NEW EUROPEAN PATENT SPECIFICATION**
After opposition procedure

(45) Date of publication and mention
of the opposition decision:
**07.12.2022   Bulletin 2022/49**

(45) Mention of the grant of the patent:
**17.05.2017   Bulletin 2017/20**

(21) Application number: **12186534.9**

(22) Date of filing: **28.09.2012**

(51) International Patent Classification (IPC):
***F03D 1/06*** (2006.01)

(52) Cooperative Patent Classification (CPC):
**F03D 1/0641; F03D 1/0683;** F05B 2240/3062;
F05B 2260/222; Y02E 10/72; Y02E 10/74

(54) **Wind turbine rotor blade**

Windturbinenlaufschaufel

Pale de rotor d'éolienne

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.04.2014   Bulletin 2014/14**

(73) Proprietor: **Siemens Gamesa Renewable Energy
A/S
7330 Brande (DK)**

(72) Inventor: **Fuglsang, Peter
7100 Vejle (DK)**

(74) Representative: **SGRE-Association
Siemens Gamesa Renewable
Energy GmbH & Co KG
Schlierseestraße 28
81539 München (DE)**

(56) References cited:
**EP-A1- 2 253 838         WO-A2-2007/114698
WO-A2-2008/113350      WO-A2-2010/100237
DE-A1-102006 017 897   DE-A1-102009 023 001**

## Description

The invention describes a wind turbine rotor blade, a wind turbine, and an airflow correction arrangement.

In a conventional wind turbine, a number of blades, usually three, is mounted onto a hub, which can be directed into the wind. Each blade is usually connected to the hub by means of a pitch system so that the pitch angle of the blade or "angle of attack" can be adjusted as necessary, for example to allow the blade to extract more energy from the wind or to pitch the blades towards feather during high wind conditions. During operation, the blades convert kinetic energy from the wind into rotational energy of a rotor in order to drive a generator. Some designs, for example as put forward in WO 2008/113350 A2 and EP 2 253 838 A1, involve the use of spoilers or other airflow improving means arranged on the blade, for example a gurney flap arranged at the trailing edge of the blade or a flow correcting device arranged on the suction side, with the aim of improving the blade's efficiency. Wind turbines with high power ratings in the order of several Megawatts are being developed. For such large wind turbines, it is important to design the blades so that as much energy as possible can be extracted from the wind. This could be achieved by extending the blade length to increase the available surface area. However, the maximum length of a blade is typically constrained by the blade tip speed, to avoid undesirable noise levels. Another problem associated with long blades is that the thinner outer ends may bend and collide with the wind turbine tower. For this reason, the hub (and nacelle) may be tilted upward from the horizontal by a few degrees to minimize the risk of collision.

In one approach to the problem of how to maximise the blade efficiency, the blade's chord length may be increased towards the root, so that the widest point of the blade is close to the hub. However, such a blade design results in higher loads on the tower, higher manufacturing costs, and difficulties in transporting the blade.

In another approach that focuses on the blade collision aspect, a longer blade is made stiffer by using carbon fibre instead of only the usual glass fibre. However, such blades are more expensive than conventional glass fibre blades and may considerably increase the total cost of a wind turbine.

In another approach, for example as described in DE 10 2006 017897 A1, the use of a spoiler in combination with a more slender and thereby "thicker" blade design is considered close to the root portion, i.e. the blade has a relatively high thickness coefficient of about 0.5 in a transition region between the round root portion and the flatter airfoil portion. The thickness coefficient at a section of an airfoil is defined as the ratio of the longest perpendicular to the chord length of that section. In this blade design for a circular root portion with a diameter of about 2 m, the chord lengths in the transition region are kept relatively short in order to reduce tensile loads on the blade in its lower regions. The spoiler acts to improve the performance of the blade in the relatively thick transition region. However, the high thickness coefficient in the transition region can result in the airflow detaching from the pressure side of the blade as the blade rotates. As a result, the lift coefficient of the blade is reduced, the effectiveness of the spoiler is diminished, and the efficiency of the blade is also reduced.

It is therefore an object of the invention to provide an improved blade design that overcomes the problems mentioned above.

This object is achieved by the wind turbine rotor blade of claim 1; and by the wind turbine of claim 13.

According to the invention, a wind turbine rotor blade, comprising a root portion and an airfoil portion, comprises a thickened zone in which the blade has a thickness coefficient of at least 0.45, which thickened zone extends outward from an inner hub end of the blade into the airfoil portion of the blade; and an airflow correction arrangement arranged on a pressure side of the blade over the thickened zone, which airflow correction arrangement comprises a spoiler arranged along a trailing edge of the blade and realised to increase blade lift; and a vortex generator arranged between a leading edge and the trailing edge and realised to maintain an attached airflow between the vortex generator and the spoiler, i.e. to ensure that the airflow remains attached over the surface of the pressure side.

An advantage of the wind turbine blade according to the invention is that the aerodynamic properties of the thick blade portion are considerably improved, so that a thick blade design can be implemented over a much longer portion of the blade, even over the entire length or span of the blade, in contrast to prior art blades in which any such thick blade portion is at most restricted to a relatively short shoulder or transition region between root portion and airfoil portion. The spoiler and vortex generator act together to improve the aerodynamic properties of the blade. The vortex generator or "turbulator" acts to cause local turbulence and to mix or stir the energized air, encouraging it to remain attached over the boundary layer along the surface of the pressure side of the blade in the direction of the spoiler. This airflow stabilizes and remains attached to the surface as it travels along the pressure side towards the spoiler in the aft or trailing edge region of the blade. The spoiler can therefore fulfil its purpose in improving the aerodynamic properties of this thicker rotor blade. The combination of vortex generator and spoiler leads to an improved performance, particularly for angles of attack between 5$^\circ$ and 25$^\circ$, which is a typical range for blade cross sections on large rotors with low rotational speed. Furthermore, because the thickened zone of the blade is associated with less overall drag (skin friction and bare drag) and a higher lift coefficient compared to a "flatter" blade (which must be wider at the shoulder region in order to extract energy from the wind), the blade according to the invention can be realised to have a relatively narrow form or shape in its lower regions adjacent to the root portion. Also, by using the favourable combination of vortex generator and spoiler, the spoiler itself can be made relatively small, since the vortex generator ensures that the airflow remains attached so that even a relatively small spoiler always "sees" the airflow. A "small spoiler" is to be understood as a spoiler with a relatively low height. These favourable aspects allow for a more straightforward manufacturing process with simpler mould shapes and with a simpler spoiler design for lower wind load; a more robust blade design with a less fragile trailing edge; and a more economical transport of the blade to the wind turbine assembly site.

A further advantage of the wind turbine blade according to the invention is that the presence of a thickened zone further outboard on the blade favourably increases the blade stiffness and thereby helps to prevent blade tower collisions. The thickened zone in combination with the airflow correction arrangement ensures that a favourable pressure-side airflow is maintained in spite of the relatively thick blade in the outboard region.

According to the invention, a wind turbine has a number of rotor blades, wherein at least one rotor blade comprises a rotor blade according to the invention. Preferably, such a wind turbine has three essentially identical rotor blades according to the invention.

An advantage of such a wind turbine is that any extended thickened zone of a rotor blade according to the invention minimizes the loss in lift coefficient and the increase in drag that would otherwise be expected for a blade with an increased relative thickness. The wind turbine according to the invention is therefore more effective in extracting energy from the wind. The increased stiffness of the "thick" blade is also beneficial in such a wind turbine, since it is not necessary to incorporate significant amounts of expensive carbon fibre to avoid tower collisions.

According to the invention, an airflow correction arrangement for correcting the airflow over a wind turbine rotor blade comprises a spoiler and a vortex generator realised for attaching to the pressure side of the blade in a region of the blade having a thickness coefficient of at least 0.45; wherein the vortex generator is dimensioned to maintain an attached airflow in the direction of the spoiler.

An advantage of the airflow correction arrangement according to the invention is that the combined action of the vortex generator or "turbulator" can significantly improve the lift coefficient of the blade over any thicker region of the blade. Such an airflow correction arrangement can be incorporated in the blade design from the outset, or can be added to an existing blade in a retrofitting procedure.

Particularly advantageous embodiments and features of the invention are given by the dependent claims, as revealed in the following description. Features of different claim categories may be combined as appropriate to give further embodiments not described herein.

In the following, it may be assumed that the rotor blade is for use in a wind turbine with a horizontal axis shaft that is housed in a nacelle mounted on top of a tower. A blade may be regarded as commencing at the hub and extending outward from the hub. Also, in the following, the terms "vortex generator" and "turbulator" may be used interchangeably. The term "thickened zone", when used in the following, is to be understood as defined above to mean the portion of the wind turbine blade that has a thickness coefficient of at least 0.45. The terms "thick" or "thickened" relate only to the definition of thickness coefficient describing a blade section geometry, i.e. to the ratio of transverse to chord, and are not necessarily related to any increase in mass or weight of the blade.

As indicated above, the thickness coefficient in prior art blades has generally been kept quite low over the airfoil portion. The thickness coefficient ($\tau$) over a typical "flat" airfoil can be about 0.25. Prior art designs generally focus on how to shape the relatively flat airfoil section in order to maximise lift. For such flat airfoils, the airflow over the pressure side will not detach, so that this aspect has not been considered over outboard sections of prior art blades. Thicker blade portions have been regarded as a necessity in the unavoidable shoulder or transition regions, in which the circular root portion segues into the flatter airfoil portion, because in prior art realisations any such thick blade section is associated with a breaking away of the airflow as it passes over the pressure side. For this reason, rior art blade designs generally focus on limiting the unavoidable transition or shoulder portions to as short a zone as possible.

The blade according to the invention was developed as a result of considering a different approach that embraces the possibilities of a high thickness coefficient instead of regarding this as a constraint that needs to be minimized. Therefore, in a particularly preferred embodiment of the invention, the rotor blade comprises a transition portion in the thickened zone between the root portion and the airfoil portion, which transition portion extends up to at least 30%, more preferably at least 50%, even up to or exceeding 70% of the blade span. Here and in the following, the term "transition portion" refers to a portion of the blade over which the thickness coefficient reduces from a high value (for example from a value of 1.0 in the circular root portion) towards a lower value in the airfoil portion of the blade. The blade according to the invention therefore clearly has a much longer transition portion than a conventional blade (which strives to keep the unavoidable shoulder or transition region as short as possible). The airflow correction arrangement ensures that the airflow remains attached over the pressure side of the thicker blade, even relatively far outboard along the blade span where the angle of attack is low on account of the increased rotational velocity of the blade.

The thickened zone can extend quite some distance outward along the blade's length beyond the transition portion, and may even extend over the entire length of the blade. According to the invention, the thickened zone extends over at least 30% of the blade span, more preferably at least 50% of the blade span, and may even extend up to 70% or more of the blade span. In the rotor blade according to the invention, therefore, the thickness coefficient comprises at least 0.45, more preferably at least 0.6, in the airfoil portion of the blade. This contrasts strongly with conventional blade design, in which the thickness coefficient is kept low over the airfoil portion, seldom exceeding values of 0.25 - 0.3. In a rotor blade according to the invention, a thick blade design can be used for much of the blade's length, and the transition portion can extend over much or even the entire "thickened zone".

In the rotor blade according to the invention, the vortex generator is arranged to extend along the length of the thickened zone, in particular when the thickened zone does not extend all the way to the blade tip. For example, the thickened zone may extend outward from the hub over two thirds of the length of the blade, and the blade airfoil may be designed to have the usual low thickness coefficient over the remainder of the blade.

A tendency of the airflow to break away from the pressure side at a certain distance along the blade may depend on the thickness coefficient at that point along the rotor blade. For example, as the distance along the blade increases, the thickness coefficient may be gradually reduced, for example from a value of 1.0 in the root section, through values of about 0.7 in a transition region, to values of about 0.45 further outboard along the blade. The tendency of the airflow to break away from the pressure side at a point relatively far out along the blade may be lower than at a point closer to the hub. Therefore, according to the invention, the vortex generator is arranged to extend along a length of the thickened zone over which the thickness coefficient exceeds 0.45.

The incoming airflow over the upwind portion of the pressure side is laminar and may be regarded as travelling essentially perpendicularly to the longitudinal axis of the rotor blade. To generate turbulence, therefore, the vortex generator is preferably realised to deflect the incoming airflow in such a way that its path of travel is altered, but not in such a way as to deflect the airflow away from the blade. To this end, therefore, in a preferred embodiment of the invention the vortex generator comprises an open arrangement of outwardly projecting vortex generator elements or "fins". These elements are preferably arranged in a linear fashion along the blade. The open arrangement allows the incoming air to pass between the vortex generator elements. Preferably, each vortex generator element "disturbs" the air to some extent, deflecting the air from the path it would otherwise take, causing a wind load on the vortex generator element, which in turn results in the creation or "shedding" of vortices that "mix" the air. For example, the vortex generator can comprise an open arrangement of vortex generator elements that are essentially parallel to the incoming airflow, but which have shaped "tail ends" that deflect the airflow, mixing or stirring the air and making it turbulent. Alternatively, in a further preferred embodiment of the invention, the vortex generator elements are arranged at alternating angles, for example in a zigzag pattern or a staggered pattern. To allow the incoming airflow to enter the vortex generator, adjacent vortex generator elements are preferably separated by a suitable distance. The distance between vortex generator elements may be a multiple of their height. In a particularly preferred embodiment of the invention, a vortex generator element comprises an essentially triangular shape and the vortex generator element is arranged on the blade such that an apex of the vortex generator element is directed essentially towards the leading edge of the blade. In this way, the airflow becomes turbulent only as it exits the vortex generator. Vortex generator elements can be made of any suitable material, for example acrylonitrile butadiene styrene (ABS), or a blend of suitable materials chosen for their durability.

The extent of turbulence can depend on the dimensions of the vortex generator. Preferably, the vortex generator is dimensioned to induce only as much turbulence as is needed to keep the flow attached over the aft portion of the blade's pressure side. Therefore, in a further preferred embodiment of the invention, the height of a vortex generator element comprises at most 2.0%, more preferably at most 1%, most preferably at most 0.125% of the corresponding chord length of the blade. The length of a vortex generator element may be derived from its height, for example, 4 to 5 times its height. In one exemplary embodiment of the airflow correction arrangement according to the invention, the height of a vortex generator element might be 1.5 cm for a chord of about 3 m, it may be about 7 cm in length, and the distance between the ends of adjacent vortex generator elements might be in the order of 6 cm.

In a particularly preferred embodiment of the invention, the spoiler is realised such that the pressure side of the blade comprises a concave surface between the vortex generator and the trailing edge of the blade. In this way, the spoiler acts to increase lift. Preferably, the spoiler comprises an essentially flat outer surface at the trailing edge of the blade. This is to be understood to mean a blunt trailing edge, for example the trailing edge can have a significant depth and can be essentially perpendicular to the chord. Such a spoiler design, having a concave inner surface on the pressure side and a flat trailing edge, means that the blade according to the invention can be narrower than a conventional blade, with a similar or even better performance as regards lift. Furthermore, by implementing a vortex generator to effectively "assist" the spoiler in its function, the spoiler can be made smaller, i.e. with a lower depth or height. This makes for a blade that is easier and more economical to manufacture and to transport.

The airflow correction arrangement according to the invention can be realised on a rotor blade as this is being manufactured. For example, the spoiler can be moulded as part of the blade itself, and the vortex generators can be embedded in the outer surface of blade's pressure side after the moulding procedure and before the blade is mounted to the hub. Of course, existing blades can be retro-fitted with such an airflow correction arrangement. The performance of any blade that has a thickened zone over a portion of its length may be improved by the addition of such an airflow correction arrangement along that thickened zone. To this end, in an airflow correction arrangement according to the invention, the vortex generator preferably comprises a plurality of vortex generator elements mounted onto a carrier strip, which carrier strip is realised for attaching to the rotor blade surface. For example, such a carrier can be flexible to some extent allowing the turbulator to follow a curvature of the blade or to maintain a certain distance to the leading edge or trailing edge. In a particularly favourable realisation, the vortex generator is realised as a plurality of vortex generator elements mounted onto an adhesive strip. Similarly, a spoiler can also be realised for mounting to the trailing edge of an already existing blade, or for covering and replacing an already existing spoiler.

For a blade that has a suitable spoiler already in place along such a thickened zone, the addition of a vortex generator can be sufficient to considerably improve the performance of the blade.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Fig. 1 shows a schematic representation of a blade according to an embodiment of the invention;
Fig. 2 shows a cross-section through a prior art blade;
Fig. 3 shows a cross-section through the blade of Fig. 1;
Fig. 4 shows a side view of a vortex generator used on the blade of Fig. 1;
Fig. 5 shows a first plot of axial interference factor for a conventional blade and the blade of Fig. 1;
Fig. 6 shows a second plot of axial interference factor for a thick blade and the blade of Fig. 1;
Fig. 7 shows a plot of performance coefficient for a prior art thick blade and the blade of Fig. 1;
Fig. 8 shows a plot of lift coefficient for a conventional blade and the blade of Fig. 1.
Fig. 9 shows a plot of the thickness coefficient for a conventional blade and for blades according to two embodiments of the invention.

In the diagrams, like numbers refer to like objects throughout. Objects in the diagrams are not necessarily drawn to scale.

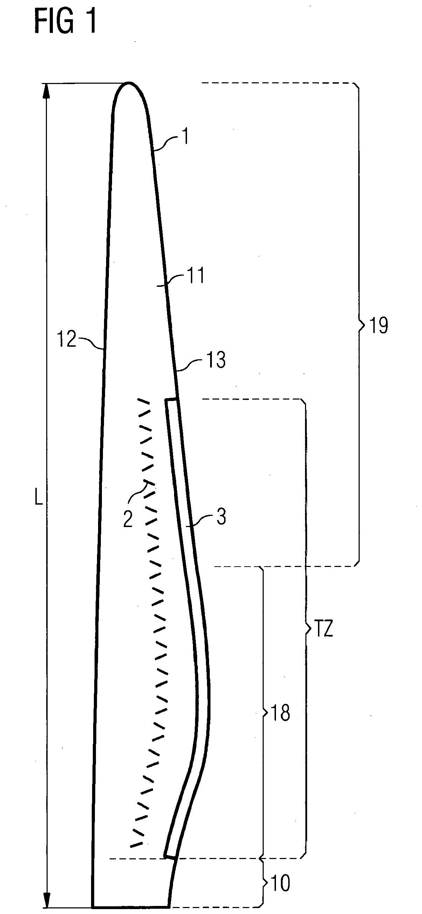

Fig. 1 shows a schematic representation of a blade 1 according to an embodiment of the invention. The blade 1 can have a length L of about 40 m or more, and may even exceed 80 m in length. The diagram shows the placement of an airfoil correction arrangement, comprising a spoiler 3 and a vortex generator 2, along a part of the blade 1 on its pressure side 11. The extent of the airfoil correction arrangement 2, 3 can depend on the thickness coefficient of the blade. The airfoil correction arrangement 2, 3 is mounted on the blade and/or formed as part of the blade to extend along the length of the thickened zone, i.e. over any blade section that has a thickness coefficient exceeding 0.45. The airfoil correction arrangement 2, 3 commences close to the root end 10 of the blade 1. The spoiler 3 is mounted along a trailing edge 13 of the blade 1, while the turbulator is mounted between the trailing edge 13 and a leading edge 12.
In the circular root portion 10, the thickness coefficient is simply 1.0. Over a transition portion 18, the thickness coefficient can smoothly decrease from a value of 1.0 at the circular root end down to a relatively high thickness coefficient in excess of 0.45, which is maintained up to the end of the thickened zone TZ. In the exemplary blade 1 shown here, the thickened zone TZ extends to about 60% of the blade span L. Of course, the thickened zone TZ could extend further outboard into an airfoil portion 19, and could even extend over the entire length L of the blade 1.

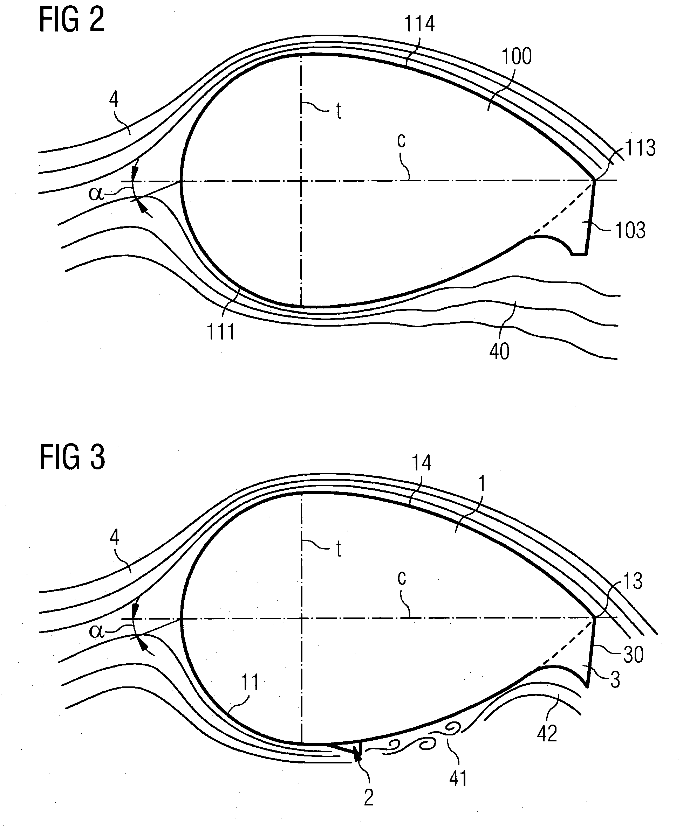

Fig. 2 shows a cross-section through a prior art blade 100. The blade is facing into the incoming airflow 4 or "relative wind" at an angle of attack $\alpha$. The incoming airflow 4 is displaced around the blade 100 as the blade 100 moves through the rotor plane, so that the airflow over a suction side 114 of the blade 100 has a lower pressure than the airflow over the pressure side 111 of the blade 100. The diagram indicates the chord line c, and the longest transverse t. The thickness coefficient $\tau$ for the blade 100 is the ratio t/c. For a high value of $\tau$, the airflow will be unable to maintain its laminar nature over the pressure side 111 and will break away as a result, indicated in the region 40 between the deepest point of the blade cross section and a trailing edge 113. Any spoiler 103 mounted to the trailing edge 113 will be rendered ineffective, since such a spoiler is only useful in conjunction with a laminar airflow being attached to the surface.

Fig. 3 shows a cross-section through the blade 1 of Fig. 1. Again, the blade 1 is facing into the incoming airflow 4 at an angle of attack $\alpha$, and the incoming airflow 4 is displaced around the blade 1 as the blade 1 moves through the rotor plane, so that the airflow over a suction side 14 of the blade has a lower pressure than the airflow over the pressure side 11 of the blade 1. For a similar cross-section to that shown in Fig. 2 above, the airflow over the pressure side 11 of the blade 1 according to this embodiment of the invention is characterized by an improved airflow 42 in the region of a spoiler 3 mounted to the trailing edge 13, since a vortex generator 2 energizes the airflow over the pressure side 11 of the blade 1, indicated by vortices 41, and effectively ensures that the airflow remains attached, i.e. close to the surface of the blade, as it travels towards the spoiler 3. This is due to the energy in the vortices 41 "mixing up" or energizing the boundary layer close to the surface of the blade. The airflow thus remains attached over the pressure side of the blade, all the way to the spoiler 3. The effectiveness of the spoiler 3 is therefore ensured, even for a high thickness coefficient $\tau$. The vortex generator 2 or turbulator 2 is preferably mounted adjacent to the deepest point of the blade, i.e. to one side of the transverse t and in the direction of the spoiler 3, before a point at which the airflow would tend to separate from the pressure side 11 in the absence of such a turbulator 2.

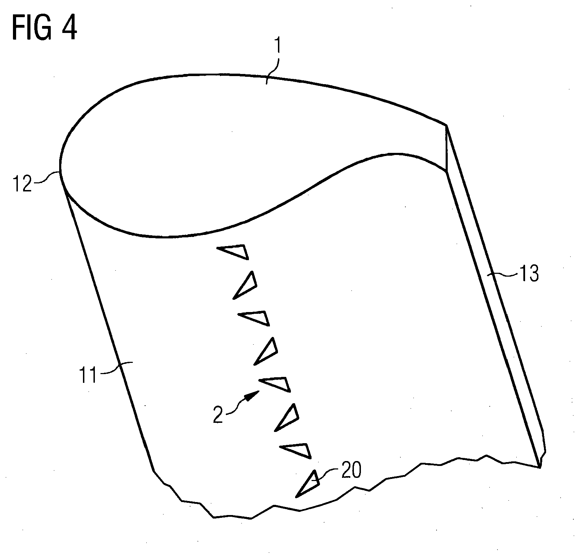

Fig. 4 shows a side view of the vortex generator 2 mounted on the pressure side 11 of the blade 1 of Fig. 1. The vortex generator 2 comprises a series of triangular vortex generator elements 20 arranged in a zigzag manner to the side of a line extending along the deepest part of the blade 1, such that the apex of each triangular element 20 is directed at an angle towards the leading edge 12, and the base of each triangular element 20 is directed towards the trailing edge 13. The height of the triangular elements 20 is shown exaggerated in the diagram. A realistic height for a triangular element 20 would comprise at most about 2% of the blade chord, i.e. the length of the chord at that point along the blade 1. A smaller height of only about 0.125% of the blade chord may even suffice to introduce a minor amount of turbulence while ensuring that the airflow remains attached over the pressure side, so that the spoiler "sees" this airflow.

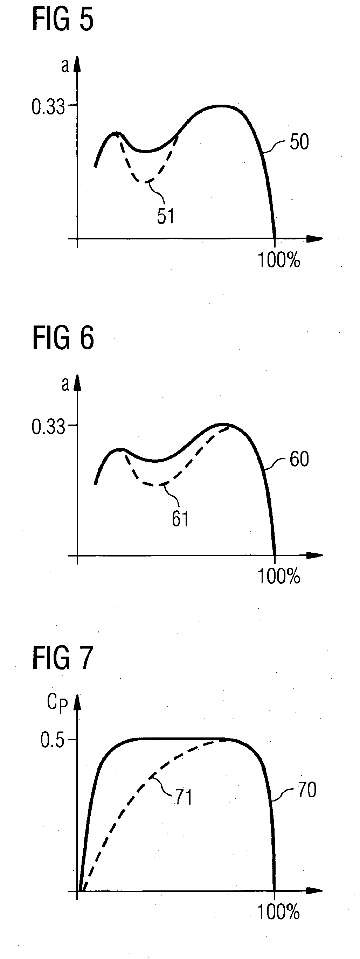

Fig. 5 shows a first plot of axial interference factor "a" for a prior art "thin airfoil" blade (indicated by curve 51 in the diagram, dotted line) and for the thick blade of Fig. 1 (indicated by curve 50 in the diagram, solid line), over the rotor blade length (X-axis). The axial interference factor "a" is a measure of how well the rotor extracts energy from the wind and can be computed using the equation:

$$a = 1 - \frac{v}{v_1}$$

where v is the wind speed upstream of the rotor, and $v_1$ is the wind speed in the rotor plane. The axial interference factor has a theoretical maximum of 1/3.

As the diagram shows, the axial interference factor for the conventional blade displays a marked dip in the lower blade regions. In those regions, the performance of the blade is rather poor. The inventive blade has considerably higher values of axial interference factor over its entire length, even in the critical lower blade regions.

Fig. 6 shows a second plot of axial interference factor "a" for a thick blade with no vortex generators (indicated by curve 61 in the diagram, dotted line) and for the thick blade of Fig. 1 (indicated by curve 60 in the diagram, solid line, corresponding to curve 50 in Fig. 5 above), over the rotor blade length (X-axis). As the diagram shows, the axial interference factor for a thick blade without any vortex generators is quite poor over much of its length, and significantly poorer than for a conventional blade as shown in Fig. 5 above. This can be explained by the tendency of the airflow to break away from the pressure side of the blade, and is the reason for the flatter airfoil design of conventional blades.

In contrast, the inventive blade has considerably higher values of axial interference factor over its entire length, simply by "correcting" the airflow with the combination of vortex generator and spoiler over the thick blade zone.

Fig. 7 shows a plot of performance coefficient $c_p$ for a thick blade with no vortex generators (indicated by curve 71, dotted line) and for the blade of Fig. 1 (indicated by curve 70, smooth line) over the blade span (X-axis) for a particular pitch angle or angle of attack. The coefficient of performance $c_p$ is the ratio of the power extracted from the wind to the "available" power, and has a theoretical maximum of about 0.59, while in practice a maximum of 0.5 is more realistic for a wind turbine blade. As the diagram shows, the absence of vortex generators on the thick blade results in a fairly poor performance in the lower regions of the blade up to about half the blade length. The blade according to the invention, with the combination of vortex generator and spoiler, delivers a much higher performance coefficient $c_p$ over the thick blade zone, reaching values close to the practicable maximum of 0.5 over most of its length. The curves 70, 71 merge over the remainder of the blade span.

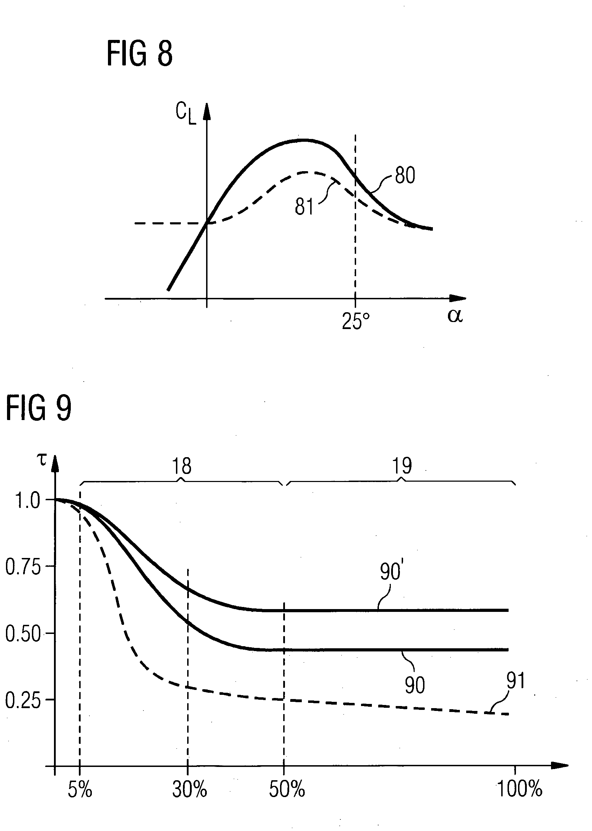

Fig. 8 shows a plot of lift coefficient $c_L$ for a thick blade with no vortex generators (indicated by curve 81, dotted line) and the blade of Fig. 1 (indicated by curve 80, smooth line) against angle of attack (X-axis). Even at a very low or negative angle of attack, the inventive blade delivers a higher lift coefficient than a thick blade without any vortex generators. This can be explained by the positive effect of the vortex generator on the air passing over the pressure side, namely that the turbulence provoked by the turbulators causes the air to maintain an attached airflow in the direction of the spoiler, thus allowing the spoiler to fulfil its function in increasing the blade lift. The advantageous performance of the inventive blade continues for angles of attack up to about 25o.

Fig. 9 shows a plot of thickness coefficient $\tau$ against blade length for a conventional blade (indicated by curve 91, broken line), and for blades according to two embodiments of the invention (indicated by curves 90 and 90', smooth lines). The conventional blade is characterized by a flatter airfoil over much of its length, and any thick portion of such a blade is limited to the unavoidable but short transition region between circular root portion and airfoil, close to the base or hub end of the blade, to about 10% - 20% of the total blade length. Over much of its length, therefore, a conventional blade has a thickness coefficient $\tau$ of less than or equal to 0.25. A thick blade according to an embodiment of the invention, with vortex generators and a spoiler along the thickened zone to ensure an attached airflow over the pressure side, can have a thickness coefficient $\tau$ of up to about 0.5 (curve 90), or even up to about 0.6 over much of its length (curve 90'). As the diagram shows, the inventive blade design does not attempt to reduce the thickness coefficient quickly beyond the root portion, instead the thickness coefficient can remain relatively high over a transition portion 18, decreasing only gradually over a relatively long fraction of the blade between about 5% and 50% of its length, and can remain high even over the airfoil portion 19.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A wind turbine rotor blade (1) comprising a root portion (10) and an airfoil portion (19), which blade (1) comprises

    - a thickened zone (TZ) in which the blade (1) has a thickness coefficient of at least 0.45, which thickened zone (TZ) extends outward from the root portion (10) of the blade (1) into the airfoil portion (19) of the blade (1) and wherein the thickened zone (TZ) extends to at least 30%, more preferably at least 50%, most preferably at least 70% of the blade span (L); and
    - an airflow correction arrangement (2, 3) arranged on a pressure side (11) of the blade (1) over the thickened zone (TZ), which airflow correction arrangement (2, 3) comprises a spoiler (3) realised to increase blade lift; and a vortex generator (2) arranged between a leading edge (12) and the trailing edge (13) and realised to maintain an attached airflow (42) between the vortex generator (2) and the spoiler (3).

2. A rotor blade according to claim 1, wherein the thickness coefficient comprises at least 0.45, more preferably at least 0.6, in the airfoil portion (19) of the blade (1).

3. A rotor blade according to claim 1 or claim 2, comprising a transition portion (18) in the thickened zone (TZ) between the root portion (10) and the airfoil portion (19), which transition portion (18) extends up to at least 30%, more preferably at least 50%, more preferably at least 70% of the blade length (L).

4. A rotor blade according to any of the preceding claims, wherein the vortex generator (2) is arranged to extend along the length of the thickened zone (TZ).

5. A rotor blade according to any of claims 1 to 4, wherein the vortex generator (2) is arranged to extend along a length of the thickened zone (TZ) over which the thickness coefficient exceeds 0.45.

6. A rotor blade according to any of the preceding claims, wherein the vortex generator (2) comprises an open arrangement of vortex generator elements (20).

7. A rotor blade according to claim 6, wherein the vortex generator elements (20) are arranged at alternating angles.

8. A rotor blade according to claim 6 or claim 7, wherein a vortex generator element (20) comprises an essentially triangular shape and the vortex generator element (20) is arranged on the blade (1) such that an apex of the vortex generator element (20) is directed essentially towards the leading edge (12) of the blade (1).

9. A rotor blade according to any of claims 6 to 8, wherein the height of a vortex generator element (20) comprises at most 2.0%, more preferably at most 1.0%, more preferably at most 0.5%, most preferably at most 0.125% of the corresponding chord length (c) of the blade (1).

10. A rotor blade according to any of the preceding claims, wherein the spoiler (3) comprises an essentially flat outer surface (30) at the trailing edge (13) of the blade (1).

11. A rotor blade according to any of the preceding claims, wherein the spoiler (3) is realised such that the pressure side (11) of the blade (1) comprises a concave surface between the vortex generator (2) and the outer surface (30) of the spoiler (3).

12. A rotor blade according to any of the preceding claims, comprising

    - a root portion (10) with a diameter of at least 2 m;
    - a blade span (L) of at least 40 m, more preferably at least 60 m, most preferably at least 80 m;

    and wherein the thickened zone (TZ) extends to at least 30%, more preferably at least 50%, most preferably at least 70% of the blade span; and wherein the spoiler (3) and the vortex generator (2) extend along the length of the thickened zone (TZ) .

**13.** A wind turbine with a number of rotor blades (1), wherein at least one rotor blade (1) comprises a rotor blade (1) according to any of the preceding claims.

## Patentansprüche

**1.** Windturbinenrotorblatt (1) mit einem Wurzelabschnitt (10) und einem Profilabschnitt (19), wobei das Blatt (1) Folgendes umfasst

- einen verdickten Bereich (TZ), in dem das Blatt (1) einen Dickenkoeffizienten von mindestens 0,45 aufweist, wobei der verdickte Bereich (TZ) von dem Wurzelabschnitt (10) des Blatts (1) aus nach außen in den Profilabschnitt (19) des Blatts (1) verläuft, und wobei der verdickte Bereich (TZ) über mindestens 30%, besonders bevorzugt mindestens 50%, ganz besonders bevorzugt mindestens 70% der Blattlänge (L) verläuft; und
- eine Luftstromregulieranordnung (2, 3), die auf einer Druckseite (11) des Blatts (1) über dem verdickten Bereich (TZ) angeordnet ist, wobei die Luftstromregulieranordnung (2, 3) einen Spoiler (3), der so ausgelegt ist, dass er den Blattauftrieb erhöht; und einen Wirbelgenerator (2), der zwischen einer Vorderkante (12) und der Hinterkante (13) angeordnet und so ausgelegt ist, dass er einen zwischen dem Wirbelgenerator (2) und dem Spoiler (3) anliegenden Luftstrom (42) konstant hält, umfasst.

**2.** Rotorblatt nach Anspruch 1, bei dem der Dickenkoeffizient bei dem Profilabschnitt (19) des Blatts (1) mindestens 0,45, besonders bevorzugt mindestens 0,6, beträgt.

**3.** Rotorblatt nach Anspruch 1 oder Anspruch 2, das in dem verdickten Bereich (TZ) zwischen dem Wurzelabschnitt (10) und dem Profilabschnitt (19) einen Übergangsabschnitt (18) umfasst, wobei der Übergangsabschnitt (18) über mindestens 30%, besonders bevorzugt mindestens 50%, besonders bevorzugt mindestens 70% der Blattlänge (L) verläuft.

**4.** Rotorblatt nach einem der vorhergehenden Ansprüche, bei dem der Wirbelgenerator (2) so angeordnet ist, dass er die Länge des verdickten Bereichs (TZ) entlang verläuft.

**5.** Rotorblatt nach einem der Ansprüche 1 bis 4, bei dem der Wirbelgenerator (2) so angeordnet ist, dass er eine Länge des verdickten Bereichs (TZ) entlang verläuft, auf der der Dickenkoeffizient 0,45 überschreitet.

**6.** Rotorblatt nach einem der vorhergehenden Ansprüche, bei dem der Wirbelgenerator (2) eine offene Anordnung von Wirbelgeneratorelementen (20) umfasst.

**7.** Rotorblatt nach Anspruch 6, bei dem die Wirbelgeneratorelemente (20) in wechselnden Winkeln angeordnet sind.

**8.** Rotorblatt nach Anspruch 6 oder 7, bei dem ein Wirbelgeneratorelement (20) eine im Wesentlichen dreieckige Form umfasst und das Wirbelgeneratorelement (20) so an dem Blatt (1) angeordnet ist, dass eine Spitze des Wirbelgeneratorelements (20) im Wesentlichen zur Vorderkante (12) des Blatts (1) weist.

**9.** Rotorblatt nach einem der Ansprüche 6 bis 8, bei dem die Höhe eines Wirbelgeneratorelements (20) maximal 2,0%, besonders bevorzugt maximal 1,0%, besonders bevorzugt maximal 0,5%, ganz besonders bevorzugt maximal 0,125% der entsprechenden Sehnenlänge (c) des Blatts (1) beträgt.

**10.** Rotorblatt nach einem der vorhergehenden Ansprüche, bei dem der Spoiler (3) an der Hinterkante (13) des Blatts (1) eine im Wesentlichen ebene Außenfläche (30) umfasst.

**11.** Rotorblatt nach einem der vorhergehenden Ansprüche, bei dem der Spoiler (3) so ausgelegt ist, dass die Druckseite (11) des Blatts (1) zwischen dem Wirbelgenerator (2) und der Außenfläche (30) des Spoilers (3) eine konkave Fläche umfasst.

**12.** Rotorblatt nach einem der vorhergehenden Ansprüche, das Folgendes umfasst

- einen Wurzelabschnitt (10) mit einem Durchmesser von mindestens 2 m;
- eine Blattlänge (L) von mindestens 40 m, besonders bevorzugt mindestens 60 m, ganz besonders bevorzugt mindestens 80 m;

und wobei der verdickte Bereich (TZ) über mindestens 30%, besonders bevorzugt mindestens 50%, ganz besonders bevorzugt mindestens 70% der Blattlänge verläuft; und wobei der Spoiler (3) und der Wirbelgenerator (2) die Länge des verdickten Bereichs (TZ) entlang verlaufen.

**13.** Windturbine mit einer Anzahl Rotorblätter (1), bei der mindestens ein Rotorblatt (1) ein Rotorblatt (1) nach einem der vorhergehenden Ansprüche umfasst.

## Revendications

**1.** Pale (1) de rotor d'éolienne comprenant une partie de pied (10) et une partie de profil aérodynamique (19), laquelle pale (1) comprend

- une zone épaissie (TZ) dans laquelle la pale (1) a un coefficient d'épaisseur d'au moins 0,45, laquelle zone épaissie (TZ) s'étend vers l'extérieur depuis la partie de pied (10) de la pale (1) jusque dans la partie de profil aérodynamique (19) de la pale (1) ; et dans lequel la zone épaissie (TZ) s'étend jusqu'à au moins 30%, plus préférablement au moins 50%, plus préférablement au moins 70% de la longueur (L) de pale ; et
- un agencement (2, 3) de correction d'écoulement d'air agencé sur un côté de pression (11) de la pale (1) de la zone épaissie (TZ), lequel agencement (2, 3) de correction d'écoulement d'air comprend un déflecteur (3) réalisé pour accroître une portance de pale ; et un générateur (2) de tourbillon agencé entre un bord d'attaque (12) et le bord de fuite (13) et réalisé pour maintenir un écoulement d'air (42) fixe entre le générateur (2) de tourbillon et le déflecteur (3).

2. Pale de rotor selon la revendication 1, dans laquelle le coefficient d'épaisseur comprend au moins 0,45, plus préférablement au moins 0,6, dans la partie de profil aérodynamique (19) de la pale (1).

3. Pale de rotor selon la revendication 1 ou la revendication 2, comprenant une partie de transition (18) dans la zone épaissie (TZ) entre la partie de pied (10) et la partie de profil aérodynamique (19), laquelle partie de transition (18) s'étend sur jusqu'à au moins 30%, plus préférablement au moins 50%, plus préférablement au moins 70% de la longueur (L) de pale.

4. Pale de rotor selon l'une quelconque des revendications précédentes, dans laquelle le générateur (2) de tourbillon est agencé pour s'étendre sur la longueur de la zone épaissie (TZ).

5. Pale de rotor selon l'une quelconque des revendications 1 à 4, dans laquelle le générateur (2) de tourbillon est agencé pour s'étendre sur une longueur de la zone épaissie (TZ) sur laquelle le coefficient d'épaisseur excède 0,45.

6. Pale de rotor selon l'une quelconque des revendications précédentes, dans laquelle le générateur (2) de tourbillon comprend un agencement ouvert d'éléments (20) de générateur de tourbillon.

7. Pale de rotor selon la revendication 6, dans laquelle les éléments (20) de générateur de tourbillon sont agencés selon des angles alternés.

8. Pale de rotor selon la revendication 6 ou la revendication 7, dans laquelle un élément (20) de générateur de tourbillon comprend une forme essentiellement triangulaire et l'élément (20) de générateur de tourbillon est agencé sur la pale (1) de telle manière qu'un sommet de l'élément (20) de générateur de tourbillon est orienté essentiellement vers le bord d'attaque (12) de la pale (1).

9. Pale de rotor selon l'une quelconque des revendications 6 à 8, dans laquelle la hauteur d'un élément (20) de générateur de tourbillon comprend au plus 2,0%, plus préférablement au plus 1,0%, plus préférablement au plus 0,5%, le plus préférablement au plus 0,125% de la longueur de corde (c) correspondante de la pale (1).

10. Pale de rotor selon l'une quelconque des revendications précédentes, dans laquelle le déflecteur (3) comprend une surface extérieure (30) essentiellement plate au niveau du bord de fuite (13) de la pale (1).

11. Pale de rotor selon l'une quelconque des revendications précédentes, dans laquelle le déflecteur (3) est réalisé de telle manière que le côté de pression (11) de la pale (1) comprend une surface concave entre le générateur (2) de tourbillon et la surface extérieure (30) du déflecteur (3).

12. Pale de rotor selon l'une quelconque des revendications précédentes, comprenant

- une partie de pied (10) avec un diamètre d'au moins 2 m ;
- une portée (L) de pale d'au moins 40 m, plus préférablement au moins 60 m, le plus préférablement au moins 80 m ;

et dans laquelle la zone épaissie (TZ) s'étend sur au moins 30%, plus préférablement au moins 50%, le plus préférablement au moins 70% de la portée de pale ; et dans laquelle le déflecteur (3) et le générateur (2) de tourbillon s'étendent sur la longueur de la zone épaissie (TZ).

13. Éolienne avec un certain nombre de pales (1) de rotor, dans laquelle au moins une pale (1) de rotor comprend une pale (1) de rotor selon l'une quelconque des revendications précédentes.

## FIG 1

FIG 2

FIG 3

FIG 4

FIG 5

FIG 6

FIG 7

FIG 8

FIG 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008113350 A2
- EP 2253838 A1
- DE 102006017897 A1